# EUROPEAN PATENT APPLICATION

(11) **EP 3 916 458 A2**
(43) Date of publication of application: **01.12.2021**
(21) Application number: 21175545.9
(22) Date of filing: 24.05.2021
(51) Int. Cl.: G02B 7/02, G02B 7/00

(54) **LENS ASSEMBLY AND FILTER**

(30) Priority: 26.05.2020 CN 202010456037; 26.05.2020 CN 202020907094 U
(71) Applicant: Shenzen Aimiduo Technology Co., Ltd., 518000 Shenzhen Guangdong Province (CN)
(72) Inventor: Qiu, Jing, Shenzhen, 518000 (CN)
(74) Representative: Handsome I.P. Ltd

(57) **Abstract**

The present disclosure relates to the technical field of photographing devices, and provides a lens assembly and a filter. The lens assembly includes: a lens frame and a lens; wherein at least one first positioning point is arranged on an edge of the lens, and at least one second positioning point corresponding to the at least one first positioning point is arranged on the lens frame, wherein a shape of the at least one first positioning point is fitted with a shape of the at least one second positioning point, and a step portion configured to bear the lens is further arranged on the lens frame, and the lens is mounted in the step portion and fixedly connected to the lens frame. The filter includes at least one lens assembly. According to the present disclosure, by fitting of the first positioning point of the lens with the second positioning point of the lens frame, the lens is quickly assembled, such that assembling efficiency and yield of the lens assembly are improved.

## Description

### TECHNICAL FIELD

The present disclosure relates to the technical field of photographing devices, and in particular, relates to a lens assembly and a filter.

### BACKGROUND

At present, most filters are intended to ensure that filter characteristics thereof are consistent with calibrated values. For example, an ND value, i.e., transmittance, of a tunable ND filter is closely related to a relative angle between front and rear lens. Therefore, mounting positions of the lens need to be limited during manufacturing. In the related art, for better assembling of the lens, in the filter, the lens is fixed to a lens frame by dispensing an adhesive in assembling. In this process, a line needs to be marked on the circular lens using an instrument, such that the line is aligned with a grating in a microscopic scale. During alignment, an operator aligns the marked line with a jig with human eyes, and mounts the lens into the lens frame, and then dispenses the adhesive. As such, assembling efficiency is low, and during assembling, due to individual differences and adhesive dispensing actions of the operators, positioning errors in the same batch of products may be different, and hence yield of assembled lens is low.

### SUMMARY

In view of the above, the present disclosure provides a lens assembly and a filter. By fitting of a first positioning point of a lens with a second positioning point of a lens frame, the lens is quickly assembled, such that assembly efficiency and yield of the lens assembly are improved.

The present disclosure provides a lens assembly. The lens assembly includes a lens frame and a lens; wherein at least one first positioning point is arranged on an edge of the lens, and at least one second positioning point corresponding to the at least one first positioning point is arranged on the lens frame, wherein a shape of the at least one first positioning point is fitted with a shape of the at least one second positioning point, and a step portion configured to bear the lens is further arranged on the lens frame, and the lens is mounted in the step portion and fixedly connected to the lens frame.

Further, the shape of the first positioning point is a boss protruding outward from a center of the lens, or is a recess dented inward towards the center of the lens.

Further, the lens assembly further includes a press ring, wherein the press ring is arranged above the lens such that the lens is abutted against the step portion and is fixedly connected to the lens frame.

Further, the press ring is threadedly connected to the lens frame, or the press ring is bonded to the lens frame by an adhesive.

The present disclosure further provides another lens assembly. The lens assembly includes a lens frame, a lens, and at least one positioning member; wherein at least one third positioning point is arranged on the lens, wherein a shape of the at least one third positioning point is fitted with a shape of the at least one positioning member, the at least one positioning member is snapped to the at least one third positioning point to fix the lens, a step portion configured to bear the lens is further arranged on the lens frame, and the lens is mounted in the step portion and fixedly connected to the lens frame.

Further, the shape of the third positioning point is a boss protruding outward from a center of the lens, or is a recess dented inward towards the center of the lens.

Further, the lens is bonded to the lens frame by a bonding agent.

The present disclosure further provides another lens assembly. The lens assembly includes a lens frame, a lens, and at least one positioning member; wherein at least one fourth positioning point is arranged on the lens frame, wherein a shape of the at least one fourth positioning point is fitted with a shape of the at least one positioning member, the at least one positioning member is snapped to the at least one fourth positioning point to fix the lens, a step portion configured to bear the lens is further arranged on the lens frame, and the lens is mounted in the step portion and fixedly connected to the lens frame.

Further, the shape of the fourth positioning point is a boss protruding outward from a center of the lens, or is a recess dented inward towards the center of the lens.

Further, the lens is bonded to the lens frame by a bonding agent.

Based on the above lens assemblies, the present disclosure further provides a filter. The filter includes at least one of the lens assemblies as described above.

The present disclosure achieves the following beneficial effects:
(1). With the lens assembly and the filter according to the present disclosure, during the manufacturing and modeling process, the positioning points have been manufactured on the lens 10 and the lens frame 20. In the subsequent process, no instrument is needed to mark lines for alignment and clean the marked lines upon completion of assembling, and thus manufacture costs are reduced and manufacture efficiency is improved.
(2). With the lens assembly and the filter according to the present disclosure, during assembling of the lens and the lens frame, alignment and assembling are quickly implemented by the existing positioning point. No manual operations are needed for aligning and assembling the lens and the lens frame using human eyes, the tooling for alignment of the marked lines is not needed, and thus the costs are reduced, and assembling efficiency of the lens assembly is improved
(3) With the lens assembly and the filter according to the present disclosure, the lens and the lens frame manufactured by a high-precision manufacture process achieve a high position match precision. This can effectively mitigate the problems of inaccurate alignments and poor consistency in mass production under by human eye-based alignments and adhesive dispensing actions, and improve yield of the lens assemblies in assembling.

### BRIEF DESCRIPTION OF THE DRAWINGS

For clear descriptions of the technical solutions according to the embodiments of the present disclosure or the related art, hereinafter, drawings that are to be referred for description of the embodiments or the related art are briefly described. Apparently, the drawings described hereinafter merely illustrate some embodiments of the present disclosure. Persons of ordinary skill in the art may also derive other drawings based on the drawings described herein without any creative effort.
FIG. 1 is a schematic structural diagram of a lens assembly according to an embodiment of the present disclosure;
FIG. 2 is a schematic exploded diagram of a lens assembly according to an embodiment of the present disclosure; and
FIG. 3 is a schematic structural diagram of a lens assembly according to an embodiment of the present disclosure.

### Reference numerals and denotations thereof:

100-Lens assembly
10-Lens
11-First positioning point
20-Lens frame
21-Second positioning point
22-Step portion
30-Press ring

### DETAILED DESCRIPTION

The technical solutions in the embodiments of the present disclosure are described in detail clearly and completely hereinafter with reference to the accompanying drawings for the embodiments of the present disclosure. Apparently, the described embodiments are only a portion of embodiments of the present disclosure, but not all the embodiments of the present disclosure. Based on the embodiments of the present disclosure, all other embodiments derived by persons of ordinary skill in the art without any creative efforts shall fall within the protection scope of the present disclosure.

For clearer descriptions of the objectives, features, and advantages of the present disclosure, the present disclosure is described in detail with reference to the attached drawings and specific embodiments.

Terms such as "first," "second," and the like in the specification, claims and the accompanying drawings of the present disclosure are intended to distinguishing different objects but are not intended to define a specific sequence. The terms "comprise," "include," and variations thereof in the specification, claims and accompanying drawings are intended to define non-exclusive meanings.

### Embodiment 1

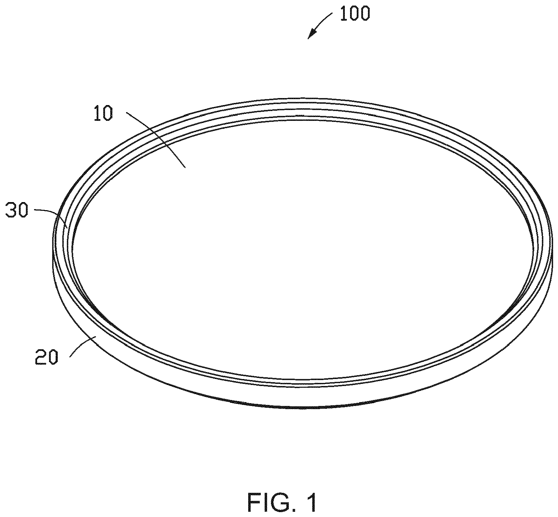

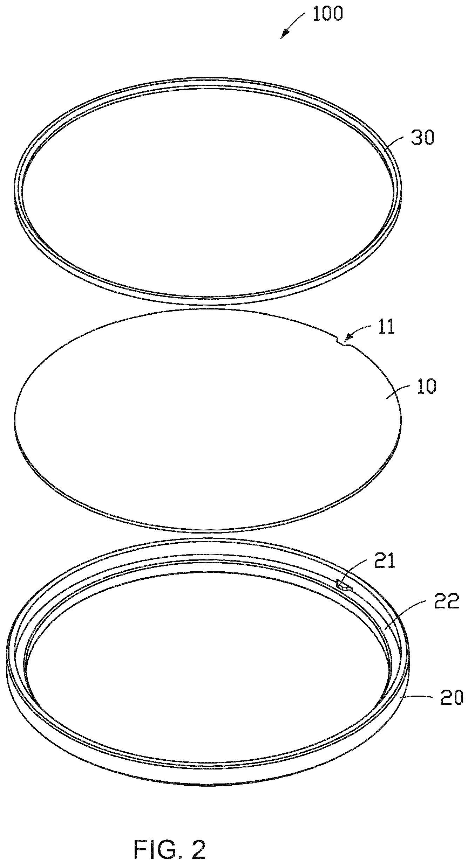

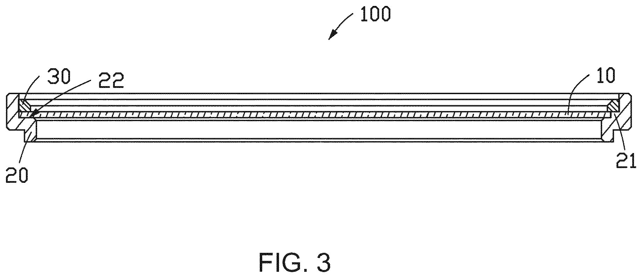

Referring to FIG. 1 to FIG. 3, this embodiment provides a lens assembly 100. The lens assembly 100 includes a lens 10 and a lens frame 20. At least one first positioning point 11 is arranged on an edge of the lens 10. At least one second positioning point 21 corresponding to the at least one first positioning point 11 is arranged on the lens frame 20. A shape of the at least one first positioning point 11 is fitted with a shape of the at least one second positioning point 21. A step portion 22 configured to bear the lens 10 is further arranged on the lens frame 20. The lens 10 is mounted in the step portion 22 and fixedly connected to the lens frame 20. In this way, the lens assembly 100 is obtained.

In this embodiment, a filter may be one of the lens assemblies 100, or may be obtained by superimposition of a plurality of lens assemblies 100.

In this embodiment, a positioning feature may be arranged on the edge of the lens 10. The positioning feature may be a positioning identifier, or may be any positioning shape. The positioning identifier may be a line marked on the lens 10. The positioning identifier may also be any positioning identifier having a positioning function on the lens 10. The any positioning shape may be defined according to different needs. For example, the any positioning shape may be a meander or a string or any other polygon. The meander is configured to position the lens 10.

In this embodiment, the edge of the lens 10 may have a circular or irregular profile, for example, an ellipse or a shape similar to an ellipse.

In this embodiment, an inner wall surface of the lens frame 20 may be in a shape fitting with the lens 10, or may be any shape not fitting with the lens 10.

In this embodiment, the shape of the first positioning point 11 is a boss protruding outward from a center of the lens 10, and the second positioning point 21 is a recess fitting with the shape of the first positioning point 11.

In this embodiment, the shape of the first positioning point 11 is a recess dented inward towards the center of the lens 10, and the second positioning point 21 is a boss fitting with the shape of the first positioning point 11.

In this embodiment, during the manufacturing and modeling process, the positioning points have been manufactured on the lens 10 and the lens frame 20. In the subsequent process, no instrument is needed to mark lines for alignment and clean the marked lines upon completion of assembling, and thus manufacture costs are reduced and manufacture efficiency is improved.

In this embodiment, during the assembling process, the first positioning point 11 and the second positioning point 21 are aligned, and the lens 10 is fitted towards the lens frame 20 such that the first positioning point 11 and the second positioning point 21 are fitted with each other until the lens 10 is abutted against the step portion 22. The lens 10 is abutted against the step portion 22 and is fixedly connected to the lens frame 20. In this case, no manual operations are needed for aligning and assembling the lens 10 and the lens frame 20 using human eyes, the tooling for alignment of the marked lines is not needed, and thus the costs are reduced, and assembling efficiency of the lens assembly is improved.

In other embodiments, the lens 10 and the lens frame 20 are bonded by a bonding agent. The bonding agent may be an adhesive or other bonding substances capable of fixing the lens to the lens frame.

In this embodiment, the lens assembly 100 further includes a press ring 30. The press ring 30 is arranged above the lens 10 such that the lens 10 is abutted against the step portion 22 and is fixedly connected to the lens frame 20.

The press ring 30 is mounted inside the lens frame 20 and is pressed over the lens 10, such that the lens 10 is abutted against the step portion 22 and is fixedly connected to the lens frame 20.

In other embodiments, a male thread is arranged on a surface, attached on an inner wall surface of the lens frame 20, of the press ring 30, and a female thread is arranged on the inner wall surface of the lens frame 20. The press ring 30 is threadedly connected to the lens frame 20.

In other embodiments, the press ring 30 may also be bonded the lens frame 20 by an adhesive.

In this embodiment, the lens 10 and the lens frame 20 manufactured by a high-precision manufacture process achieve a high position match precision. This can effectively mitigate the problems of inaccurate alignments and poor consistency in mass production under by human eye-based alignments and adhesive dispensing actions, and improve yield of the lens assemblies in mass production.

In other embodiments, the press ring 30 has a predetermined shape, and the press ring 30 is abutted against the inner wall surface of the lens frame 20 by virtue of a self flare elastic force of the predetermined shape.

The predetermined shape may be a flange. The flange is arranged on the surface, attached on the inner wall surface of the lens frame 20, of the press ring 30. The inner wall surface of the lens frame 20 is provided with a shape fitted with the flange. By virtue of a self flare elastic force of the flange, the press ring 30 is abutted in the shape, fitted with the flange, on the inner wall surface of the lens frame 20.

In this embodiment, the lens frame 20 and the press ring 30 are both made of a high-strength material, for example, an aluminum alloy, a copper alloy, a stainless steel, or the like.

In summary, this embodiment provides a lens assembly and a filter. By fitting of a first positioning point of a lens with a second positioning point of a lens frame, the lens is quickly assembled, such that assembly efficiency and yield of the lens assembly are improved.

### Embodiment 2

This embodiment provides another lens assembly 100. The lens assembly 100 includes a lens 10, a lens frame 20, and at least one positioning member. At least one third positioning point is arranged on the lens 10. A shape of the at least one third positioning point is fitted with a shape of the at least one positioning member. The at least one positioning member is snapped to the at least one third positioning point to fix the lens 10. A step portion 22 configured to bear the lens 10 is further arranged on the lens frame 20. The lens 10 is mounted in the step portion 22 and fixedly connected to the lens frame 20.

In this embodiment, a filter may be one of the lens assemblies 100, or may be obtained by superimposition of a plurality of lens assemblies 100.

In this embodiment, the shape of the third positioning point is a boss protruding outward from a center of the lens 10, or is a recess dented inward towards the center of the lens 10.

In other embodiments, the lens 10 and the lens frame 20 are bonded by a bonding agent. The bonding agent may be an adhesive or other bonding substances capable of fixing the lens to the lens frame.

In this embodiment, the lens frame 20 is made of a high-strength material, for example, an aluminum alloy, a copper alloy, a stainless steel, or the like.

In this embodiment, the lens is snapped and fixed by virtue of the at least one positioning member and the third positioning point on the lens 10. This can effectively mitigate the problems of inaccurate alignments and poor consistency in mass production under by human eye-based alignments and adhesive dispensing actions, and improve yield of the lens assemblies in mass production.

In summary, this embodiment provides a lens assembly and a filter. By fitting of at least one positioning member and the third positioning point on the lens, the lens is quickly assembled, such that assembly efficiency and yield of the lens assembly are improved.

### Embodiment 3

This embodiment provides another lens assembly 100. The lens assembly 100 includes a lens 10, a lens frame 20, and at least one positioning member. At least one fourth positioning point is arranged on the lens frame 20. A shape of the at least one fourth positioning point is fitted with a shape of the at least one positioning member. The at least one positioning member is snapped to the at least one fourth positioning point to fix the lens 10. A step portion 22 configured to bear the lens 10 is further arranged on the lens frame 20. The lens 10 is mounted in the step portion 22 and fixedly connected to the lens frame 20.

In this embodiment, a filter may be one of the lens assemblies 100, or may be obtained by superimposition of a plurality of lens assemblies 100.

In this embodiment, the shape of the fourth positioning point is a boss protruding outward from a center of the lens 10, or is a recess dented inward towards the center of the lens 10.

In other embodiments, the lens 10 and the lens frame 20 are bonded by a bonding agent. The bonding agent may be an adhesive or other bonding substances capable of fixing the lens to the lens frame.

In this embodiment, the lens frame 20 is made of a high-strength material, for example, an aluminum alloy, a copper alloy, a stainless steel, or the like.

In this embodiment, the lens is snapped and fixed by virtue of the at least one positioning member and the fourth positioning point. This can effectively mitigate the problems of inaccurate alignments and poor consistency in mass production under by human eye-based alignments and adhesive dispensing actions, and improve yield of the lens assemblies in mass production.

In summary, this embodiment provides a lens assembly and a filter. By fitting of at least one positioning member and the fourth positioning point on the lens frame, the lens is quickly assembled, such that assembly efficiency and yield of the lens assembly are improved.

### Embodiment 4

This embodiment provides a filter. The filter includes at least one lens assembly 100 as described in Embodiment 1, Embodiment 2, or Embodiment 3.

The above-described embodiments achieves the following beneficial effects:
(1). With the lens assembly and the filter according to the present disclosure, during the manufacturing and modeling process, the positioning points have been manufactured on the lens 10 and the lens frame 20. In the subsequent process, no instrument is needed to mark lines for alignment and clean the marked lines upon completion of assembling, and thus manufacture costs are reduced and manufacture efficiency is improved.
(2). With the lens assembly and the filter according to the present disclosure, during assembling of the lens and the lens frame, alignment and assembling are quickly implemented by the existing positioning point. No manual operations are needed for aligning and assembling the lens and the lens frame using human eyes, the tooling for alignment of the marked lines is not needed, and thus the costs are reduced, and assembling efficiency of the lens assembly is improved
(3) With the lens assembly and the filter according to the present disclosure, the lens and the lens frame manufactured by a high-precision manufacture process achieve a high position match precision. This can effectively mitigate the problems of inaccurate alignments and poor consistency in mass production under by human eye-based alignments and adhesive dispensing actions, and improve yield of the lens assemblies in assembling.

It should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of the technical features contained therein. Such modifications or replacement, made without departing from the principles of the present disclosure, shall fall within the scope of the present disclosure.

## Claims

1. A lens assembly, comprising a lens frame and a lens; wherein at least one first positioning point is arranged on an edge of the lens, and at least one second positioning point corresponding to the at least one first positioning point is arranged on the lens frame, wherein a shape of the at least one first positioning point is fitted with a shape of the at least one second positioning point, and a step portion configured to bear the lens is further arranged on the lens frame, and the lens is mounted in the step portion and fixedly connected to the lens frame.

2. The lens assembly according to claim 1, wherein the shape of the first positioning point is a boss protruding outward from a center of the lens, or is a recess dented inward towards the center of the lens.

3. The lens assembly according to claim 1, further comprising a press ring, wherein the press ring is arranged above the lens such that the lens is abutted against the step portion and is fixedly connected to the lens frame.

4. The lens assembly according to claim 3, wherein the press ring is threadedly connected to the lens frame, or the press ring is bonded to the lens frame by an adhesive.

5. A lens assembly, comprising a lens frame, a lens, and at least one positioning member; wherein at least one third positioning point is arranged on the lens, wherein a shape of the at least one third positioning point is fitted with a shape of the at least one positioning member, the at least one positioning member is snapped to the at least one third positioning point to fix the lens, a step portion configured to bear the lens is further arranged on the lens frame, and the lens is mounted in the step portion and fixedly connected to the lens frame.

6. The lens assembly according to claim 5, wherein the shape of the third positioning point is a boss protruding outward from a center of the lens, or is a recess dented inward towards the center of the lens.

7. The lens assembly according to claim 5, wherein the lens is bonded to the lens frame by a bonding agent.

8. A lens assembly, comprising a lens frame, a lens, and at least one positioning member; wherein at least one fourth positioning point is arranged on the lens frame, wherein a shape of the at least one fourth positioning point is fitted with a shape of the at least one positioning member, the at least one positioning member is snapped to the at least one fourth positioning point to fix the lens, a step portion configured to bear the lens is further arranged on the lens frame, and the lens is mounted in the step portion and fixedly connected to the lens frame.

9. The lens assembly according to claim 8, wherein the shape of the fourth positioning point is a boss protruding outward from a center of the lens, or is a recess dented inward towards the center of the lens.

10. The lens assembly according to claim 8, wherein the lens is bonded to the lens frame by a bonding agent.

11. A filter, comprising at least one lens assembly as defined in any one of claims 1 to 4, or at least one lens assembly as defined in any one of claims 5 to 7, or at least one lens assembly as defined in any one of claims 8 to 10.
